# EUROPEAN PATENT APPLICATION

(11) **EP 3 208 296 A1**
(43) Date of publication of application: **23.08.2017**
(21) Application number: 16155948.9
(22) Date of filing: 16.02.2016
(51) Int. Cl.: C08H 7/00, C08H 8/00, C13K 1/02

(54) **METHOD FOR PREPARATION OF NOVEL BIO BASED MATERIALS**

(71) Applicant: BIOeCON International Holding N.V., 3871 KM Hoevelaken (NL)
(72) Inventor: O'Connor, Paul, 3871KM Hoevelaken Gld (NL); Babich, Igor, 7545 GM Enschede (NL); Heinermann, Jacobus Johannes Leonardus, 1391 AC Abcoude (NL); Xu, Lixian, 5652 VH Eindhoven (NL); Van den Bergh, Johan, 3315 MA Dordrecht (NL)

(57) **Abstract**

The present invention relates generally to the method for production of ligno-oligomers, oligomers an lignin at low temperatures with reduced particle size (< 1000 microns, preferably < 100 microns) and modified physical and chemical properties, suitable for processing into fuels, chemicals and/or advanced materials.

## Description

### Technical Field

The main advantages of this technology are: Particle Size reduction: From > 1 mm, ±1000-3000p to less than 100p. Enhanced reactivity: Cellulose liquefaction T> 350oC to less than 200oC. Minerals removal: Removal of K, Ca, Fe (catalyst poisons)

### Summary of invention

The invention relates generally to the method for production of ligno-oligomers and lignin with reduced particle size (< 1000 microns, preferably < 100 microns) and modified physical and chemical properties, suitable for further processing for various applications.

Ligno-oligomers are (hemi)cellulosic oligomers and mixtures of lignin and (hemi)cellulosic oligomers, and (hemi)cellulosic oligomers are hemi cellulosic oligomers (oligomers containing C5 and C6 components) and cellulosic oligomers (only C6 Components) and mixtures of hemi cellulosic oligomers and cellulosic oligomers.

Cellulosic oligomers are oligomers build-up of C6 sugars, (hemi)cellulosic oligomers are oligomers comprising C5 and C6 sugars as buildings blocks, lignin is solid residue remaining after biomass treatment in the solvent.

This invention also allows for the production of pure C6 cellulosic oligomers, for instance if the C5 components (hemi-cellulose) are removed from the biomass prior to the separation of the lignin from the cellulose.

The C6 Oligomers (Often called Cellulose) produced via this invention are unique with a particle size < 100 microns are of interest as advanced materials.

Also the lignin produced via this invention is unique and still retains most of its natural properties.

### Description of embodiments

As solvent an inorganic molten salt hydrate, e.g. ZnCl2.nH2O can be used. More specifically the preferred solvent is a mix of ZnCl2 and ZnO, as pure ZnCl2 will result in undesired (partial) hydrolysis of the oligomers.

To optimize the functions (e.g. solvent acidity) of the solvent it may be treated with ZnO, ZN(OH)2 and/or Zinc hydroxyl chlorides.

Optionally other basic salts can be added during the process.

By controlling the Acidity of the solvent the hydrolysis rate can be reduced yielding higher MW Oligomers at a higher yield.

Moreover the solvent becomes less corrosive.

Optionally mixtures of molten salt hydrates can be used.

As anti-solvent water (H2O) is used.

Optionally also organic anti-solvents such as but not limited to alcohols, can be used. Some examples are: Ethanol, TBA,.....

Materials produced (Oligomers, Lignin, Ligno-Oligomers) can be used for production of polymers, building materials, binders, paper coatings, paint additives, pigments, surfactants, food applications, fillers, and/or textiles.

Materials produced (Oligomers, Lignin, Ligno-Oligomers) can also be applied for biomass conversion processes to produce fuels and chemicals.

Dissolved minerals can be removed from solvent and / or anti-solvent. Optionally the minerals present in the biomass can be removed prior to the separation of the oligomers from the lignin.

The ZnCl2.nH2O solvent is used at ZnCl2 concentrations less than 70%, but higher than 10%..

The temperature of performed dissolution is below 100o C, preferably below 80° C.

The ZnCl2.nH2O acidity can be controlled by modifying the ZnO/ZnCl2 content.

Increasing the ZnO/ZnCl2 ratio will reduce the hydrolysis of the oligomers to monomeric sugars and hence increase the oligomers yield and their molecular weight distribution, while at the same time ZnO acts as a corrosion inhibitor.

### Industrial applicability

Based on this we foresee applications of this technology in several areas, such as improved biomass feedstock for: Catalytic Pyrolysis/ Gasification/ Enzymatic conversion/ HTU/Bio-crack and FCC (Dispersed solids/Liquid); Advanced Materials such as: biomass based polymers and plastics, building materials, binders, new types of wood and textiles, paper coatings, pigments, paint additives, surfactants and new food constituents.

These advanced materials are also particularly suitable for moulding as for instance in 3D printing.

In a specific embodiment the new materials produced can be combined with flame retardants, preferably inorganic flame retardants such as certain Alumina's and modified Alumina's (modified with Mg, Zn, Ca, Ba or oxides thereof) to yield Flame retardant (FR) materials for application as FR building materials, FR polymers and FR textiles.

In a specific embodiment the new materials can be produced such as Artificially Enhanced Wood (AEW) which can be enhanced by having strength in all dimensions (3D) and optionally with additives (FR etc.)

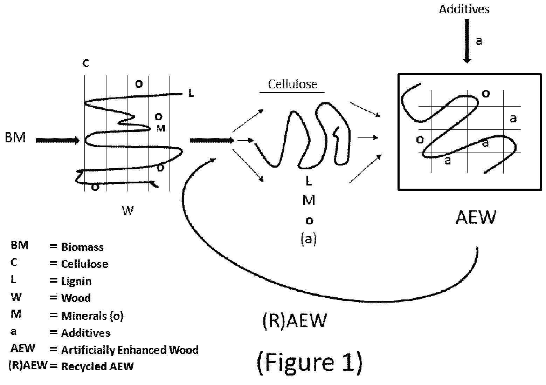

In a specific embodiment the materials produced can be recycled via the same process; see Figure 1 for the case of Artificially enhanced Wood.

In a specific embodiment Virgin paper pulp is used as feedstock to produce cellulosic oligomers which combined with inorganic components and/or plastics to produce reinforced plastic composites suitable in food applications such as packaging, pharmaceutical packaging and in the toy industry.

In a specific embodiment recycled paper pulp or cotton is used as feedstock to produce cellulosic oligomers which combined with inorganic components and/or plastics to produce reinforced plastic composites suitable in food applications such as packaging with indirect food contact and/or as construction materials.

In a specific embodiment the oligomers produced are applied as additives prior to drying, optionally in the presence of other components such as inorganic components and/or plastics.

In a specific embodiment the oligomers and/or lignin can be combined with inorganic components and/or traditional building materials to produced composites suitable for the application in construction of buildings and/or mobile vehicles (Aircraft, Ships, Cars, Trucks etc.)

In a specific embodiment the oligomers produced are used for the production of paper.

In a specific embodiment the new materials produced can be used in water treatment technologies as a renewable and biodegradable alternative.

In a specific embodiment the oligomers and/or lignin produced are used for the production of asphalt, rubber, glue and resins.

## Claims

1. Process for the production of ligno-oligomers comprising the steps of:
a) dissolution of cellulose and hemi-cellulose fraction of biomass making use of an inorganic molten salt hydrate as an inorganic solvent.
b) Precipitation of the dissolved (hemi-cellulose and cellulose) by adding an anti-solvent (e.g. H2O and / or an organic anti-solvent).
c) Precipitation of b) on the Lignin fraction forming ligno-oligomers.

2. The process of claim 1 wherein fractions of lignin and oligomers are separately precipitated after liquid-solid separation.

3. The process of claim 1 & 2 wherein the C6 Oligomers are precipitated separately.

4. The process of claim 1 & 2wherein the molten salt hydrate is ZnCl2.

5. The process of claim 1 & 2 wherein the molten salt is a mixture of ZnCl2 and ZnO.

6. The process of claims 1 - 3 wherein solvent is separated or partially separated from dissolution containing the anti-solvent.

7. The process of claims 1 - 3 wherein solvent can be recovered

8. The solvent of claim 4 can be reused as the solvent in claim 1.

9. The process of claims 1-5 preformed at temperatures below 100oC.

10. The applications of these materials for further conversion into fuels and chemicals.

11. The applications of these materials for further conversion into fuels and chemicals by thermo-catalytic and/or enzymatic processes.

12. The application of these materials as advanced Materials such as:
biomass based polymers and plastics, building materials, binders, surfactants, new types of wood (Artificially enhanced wood), composites, cotton and textiles and/ or new food constituents as well as coatings for paper and textiles.

13. The conversion of these materials into advanced Materials such as:
biomass based polymers and plastics, building materials, binders, surfactants, new types of wood (Artificially enhanced wood), composites, cotton and textiles and/ or new food constituents as well as coatings for paper and textiles.

14. The conversion as mentioned in claim 13 may be thermal, chemical, catalytic, thermochemical, thermocatalytic or biological.
